# EUROPÄISCHE PATENTANMELDUNG

(11) **EP 4 011 807 A1**
(43) Veröffentlichungstag der Anmeldung: **15.06.2022**
(21) Anmeldenummer: 21212762.5
(22) Anmeldetag: 07.12.2021
(51) Int. Cl.: B65G 1/137, B25J 5/00

(54) **VERFAHREN UND SYSTEM ZUM KOMMISSIONIEREN VON STÜCKGÜTERN**

(30) Priorität: 14.12.2020 DE 102020133367
(71) Anmelder: Linde Material Handling GmbH, 63743 Aschaffenburg (DE)
(72) Erfinder: KRUMBHOLZ, Peter, 63869 Jakobsthal (DE); BROCKEL, Sascha, 63906 Erlenbach a. Main (DE)
(74) Vertreter: Patentship Patentanwaltsgesellschaft mbH

(57) **Zusammenfassung**

Die Erfindung betrifft ein Verfahren zum Kommissionieren von Stückgütern (22), die auf mindestens einem als Quell-Ladungsträger dienenden Ladungsträger (31) bevorratet und vereinzelt auf mindestens einem als Ziel-Ladungsträger dienenden Ladungsträger (31) abgelegt werden, wobei mindestens ein Greiffahrzeug (2), auf dem eine Handhabungseinrichtung (21) angeordnet ist, und mindestens ein Transportfahrzeug (3), auf dem mindestens einer der Ladungsträger (31) angeordnet ist, vorgesehen sind, und wobei die Stückgüter (22) mittels der Handhabungseinrichtung (21) des Greiffahrzeugs (2) von dem als Quell-Ladungsträger dienenden Ladungsträger (31) aufgenommen und auf dem als Ziel-Ladungsträger dienenden Ladungsträger (31) abgelegt werden. Es wird vorgeschlagen, dass mittels eines auf dem Greiffahrzeug (2) vorgesehenen Ladungsträger-Erkennungssystems (26) der auf dem Transportfahrzeug (3) angeordnete Ladungsträger (31) erkannt wird und die relative Positionierung des auf dem Transportfahrzeug (3) angeordneten Ladungsträgers (31) zum Greiffahrzeug (2) ermittelt wird. Ferner betrifft die Erfindung ein System (1) zur Durchführung des Verfahrens.

## Beschreibung

Die Erfindung betrifft ein Verfahren zum Kommissionieren von Stückgütern, die auf mindestens einem als Quell-Ladungsträger dienenden Ladungsträger bevorratet und vereinzelt auf mindestens einem als Ziel-Ladungsträger dienenden Ladungsträger abgelegt werden, wobei mindestens ein Greiffahrzeug, auf dem eine Handhabungseinrichtung angeordnet ist, und mindestens ein Transportfahrzeug, auf dem mindestens einer der Ladungsträger angeordnet ist, vorgesehen sind, und wobei die Stückgüter mittels der Handhabungseinrichtung des Greiffahrzeugs von dem als Quell-Ladungsträger dienenden Ladungsträger aufgenommen und auf dem als Ziel-Ladungsträger dienenden Ladungsträger abgelegt werden.

Außerdem betrifft die Erfindung ein System zur Durchführung eines Verfahrens zum Kommissionieren von Stückgütern.

Unter Kommissionierung versteht man alle Methoden zur Zusammenstellung von bestimmten Objekten, insbesondere von Stückgütern, z.B. Packstücken, in Warenlagern, aus einem bereitgestellten Gesamtsortiment. Dabei soll die Zusammenstellung aufgrund von Aufträgen, z.B. Kundenaufträgen oder Produktionsaufträgen erfolgen. In jüngster Zeit werden hierfür vermehrt automatische Systeme eingesetzt. Dabei werden die Stückgüter von autonom oder automatisch betriebenen Transportfahrzeugen von einer Quellposition, insbesondere einem Quell-Ladungsträger, z.B. einer Quellpalette, aufgenommen und auf einem auf dem Fahrzeug transportierten Ziel-Ladungsträger, z.B. einer Zielpalette, abgesetzt. Insbesondere werden hierzu mobile Kommissionierroboter verwendet, die die Stückgüter selbstständig mittels Roboterarmen von einem Quell-Ladungsträger aufnehmen und anschließend auf einem Ziel-Ladungsträger ablegen können. Diese Kommissionierroboter erhalten die Auftragsdaten wie Auftragsnummer, Koordinaten des Lagerortes, Stückzahl und Gewicht der Stückgüter automatisch von einem Zentralrechner. Sie können z.B. bestimmte Regalfächer in Regallagern gezielt anfahren und das gewünschte Objekt mithilfe einer Handhabungseinrichtung, insbesondere eines ein Aufnahmewerkzeug aufweisenden Greifsystems, aus dem Regalfach entnehmen. Das Aufnahmewerkzeug kann als Greifer, beispielsweise als Adhäsionsgreifer oder Vakuumgreifer, ausgebildet sein.

Die zur Kommissionierung eingesetzten Fahrzeuge sind meist selbst fahrfähig oder werden von einem autonomen Fahrzeug (englisch: automated guided vehicle, kurz: AGV) verfahren und weisen meist einen Hubmast oder eine andere Hubeinrichtung zur vertikalen Positionierung des Greifers im Regal und auf dem Zielgebinde auf.

Ganz allgemein sind autonome Fahrzeuge für unterschiedliche Tätigkeiten und dementsprechend in unterschiedlichen Ausführungsformen gebräuchlich. Insbesondere sind autonome Gegengewichtsstapler, autonome Schubmaststapler, autonome Vertikalkommissionierer und autonome Schmalganggeräte bekannt.

Beim Bauen von Mischpaletten, d.h. einem Ziel-Ladungsträger, auf dem unterschiedliche Stückgüter kommissioniert werden, muss ein stabiles Packmuster gebaut werden, damit eine hohe Packdichte erreicht wird. Die Paletten werden dadurch nicht so hoch und es werden auch nicht so viele Paletten benötigt. Außerdem wird damit auch die nötige Stabilität erreicht. Dies gilt im stationären, aber noch viel mehr im mobilen Anwendungsfall.

Dementsprechend ist auch ein exaktes Ablegen des vom Quell-Ladungsträger gegriffenen Stückgutes an der durch einen Packmustergenerator vorberechneten Stelle des Ziel-Ladungsträgers unabdingbar.

Bekannt sind kollaborative Kommissioniersysteme, die mehrere Fahrzeuge umfassen. Dabei ist ein als Greiffahrzeug dienendes Fahrzeug mit entsprechender Greiftechnik ausgestattet, um Stückgüter beispielsweise aus einem Regal oder von einer Quellpalette zu greifen, während ein weiteres Transportfahrzeug, beispielsweise ein Begleitfahrzeug, die Zielpalette transportiert und das gegriffene Paket aufnimmt.

Die Aufgabe des positionsgenauen Ablegens des Stückgutes auf der auf dem Transportfahrzeug befindlichen Ziel-Palette ist durch das Greiffahrzeug zu erledigen, weil dieses über entsprechende Manipulatoren und auch über Sensorik verfügt.

Durch den kollaborativen Ansatz und die Verteilung der Aufgaben auf zwei Fahrzeuge, kommen neue Toleranzen ins System. Beide Fahrzeuge lokalisieren sich mittels eines geeigneten Lokalisierungssystems, das zum Beispiel Reflektoren umfasst, im absoluten Lagerhaus-Koordinatensystem, wobei bei beiden Messungen ein Fehler, meist im Bereich mehrerer Zentimeter, auftritt.

Weitere Toleranzen entstehen durch die Positionierung des Ziel-Ladungsträgers auf dem Transportfahrzeug. Die Positionierung, d.h. die Position und die Orientierung, des Ziel-Ladungsträgers auf dem Transportfahrzeug wird zwar häufig automatisiert in Übergabestationen durchgeführt, dennoch können dabei oder während der Fahrt Toleranzen entstehen.

Ein Ablegen der gegriffenen Stückgüter von dem Greiffahrzeug auf dem auf dem Transportfahrzeug befindlichen Ziel-Ladungsträger mit einer Genauigkeit von wenigen Millimetern, wie es für ein stabiles Packmuster notwendig ist, ist damit auf dem Ziel-Ladungsträger nicht mehr möglich. Es ist folglich zwingend erforderlich, die Position und Orientierung der Zielpalette zu bestimmen, um die zuvor beschriebenen Toleranzen kompensieren zu können und ein präzises Ablegen der Stückgüter auf dem Ziel-Ladungsträger zu ermöglichen.

Die DE 10 2006 057 758 A1 offenbart ein Verfahren sowie eine Vorrichtung zum Kommissionieren von Waren. Aus einem Hochregallager entnimmt ein längs einer Schiene beweglich gelagerter Industrieroboter einzelne Waren und übergibt diese auf ein bewegliches Zwischenlager, das zu einem Palettierroboter verfährt, der die auf dem Zwischenlager abgelegten Waren unter Zugrundelegung eines Kommissionierungsplanes auf eine stationäre Zielpalette unter Ausbildung eines gemischten Warenstapels übergibt.

Die US 2015 / 0 073 589 A1 beschreibt ein autonomes, mobiles Handhabungssystem mit einem mobilen Greifroboter, der Produkte aus einem Warenlager aufnimmt und auf einer mitgeführten und/oder eigenmobilen Zielpalette abzulegen vermag.

In der DE 10 2016 211 469 B2 wird das kollaborative Zusammenarbeiten von Fahrzeugen beim Kommissionieren beschrieben. Dabei kommt eine fahrzeugexterne, den kompletten Kommissioniervorgang räumlich erfassende Sensorik zum Einsatz, die einen erheblichen technischen Investitionsaufwand erfordert.

Der vorliegenden Erfindung liegt die Aufgabe zugrunde, ein Verfahren der eingangs genannten Art sowie ein System zur Durchführung des Verfahrens so auszugestalten, dass ein zielgenaues Aufnehmen und/oder Ablegen der Stückgüter von dem beziehungsweise auf dem Ladungsträger mit geringem technischen Investitionsaufwand ermöglicht wird.

Diese Aufgabe wird verfahrensseitig erfindungsgemäß dadurch gelöst, dass mittels eines auf dem Greiffahrzeug vorgesehenen Ladungsträger-Erkennungssystems der auf dem Transportfahrzeug angeordnete Ladungsträger erkannt wird und die relative Positionierung des auf dem Transportfahrzeug angeordneten Ladungsträgers zum Greiffahrzeug ermittelt wird.

Mit der Erfindung wird also ein fahrzeugeigenes Ladungsträger-Erkennungssystem zur Verfügung gestellt, mit dem das Vorhandensein eines Ladungsträgers auf einem Transportfahrzeug als solches erkannt und darüber hinaus die relative Positionierung des Ladungsträgers zum Greiffahrzeug ermittelt werden kann. Wird mittels eines solchen Ladungsträger-Erkennungssystem beispielsweise eine Zielpalette auf dem Transportfahrzeug detektiert und lokalisiert, so sind die angesprochenen Positionstoleranzen irrelevant, weil eine relative Positionierung der Handhabungseinrichtung des Greiffahrzeugs zur Zielpalette möglich ist.

Dabei eignet sich die Erfindung sowohl zum zielgenauen Ablegen von Stückgütern auf den als Ziel-Ladungsträgern dienenden Ladungsträgern als auch zum zielgenauen Aufnehmen von Stückgütern von als Quell-Ladungsträgern dienenden Ladungsträgern. Die Ladungsträger können jeweils auf einem Transportfahrzeug angeordnet sein. Üblicherweise ist der Ziel-Ladungsträger auf dem Transportfahrzeug angeordnet und die Handhabungseinrichtung des Greiffahrzeugs legt die Stückgüter zielgenau auf dem Ziel-Ladungsträger des Transportfahrzeugs ab. Denkbar ist es aber auch, dass der Quell-Ladungsträger auf dem Transportfahrzeug angeordnet ist und die Handhabungseinrichtung des Greiffahrzeugs die Stückgüter vom Quell-Ladungsträger des Transportfahrzeugs zielgenau aufnimmt.

Gemäß einer besonders bevorzugten Ausgestaltung der Erfindung wird als Ladungsträger-Erkennungssystem ein, eine Sensoreinrichtung und eine elektronische Steuerungseinrichtung umfassendes, Ladungsträger-Erkennungssystem verwendet. Dabei erfasst die Sensoreinrichtung Objekte in der Umgebung des Greiffahrzeugs und übermittelt Sensordaten der erfassten Objekte an die Steuerungseinrichtung. Die Steuerungseinrichtung wertet die Sensordaten mittels eines, auf eine Ladungsträger-Erkennung ausgelegten Algorithmus, aus. Bei Erkennung des auf dem Transportfahrzeug angeordneten Ladungsträgers wird die relative Positionierung des auf dem Transportfahrzeug angeordneten Ladungsträgers zum Greiffahrzeug ermittelt.

Wird mittels eines solchen Ladungsträger-Erkennungssystems der Ladungsträger auf dem Transportfahrzeug detektiert und lokalisiert, so sind die angesprochenen Positionstoleranzen irrelevant, weil eine relative Positionierung der Handhabungseinrichtung des Greiffahrzeugs zum Ladungsträger des Transportfahrzeugs möglich ist. Dazu muss in der Steuerungseinrichtung oder in einer zentralen Steuerungseinheit des Greiffahrzeugs, die die Handhabungseinrichtung steuert, nur noch die exakte Positionierung der Sensoreinrichtung und des Manipulators oder Greifers der Handhabungseinrichtung bekannt sein, damit die Koordinatensysteme mittels einfacher Transformationen in einander umgerechnet werden können. Die Positionsfehler beider Fahrzeuge im absoluten Lagerhaus-Koordinatensystem, sowie die Positionsfehler des Ladungsträgers auf dem Transportfahrzeug spielen keine Rolle mehr. Die Positionierungsfehler müssen dabei lediglich auf ein Maß begrenzt sein, dass der Ladungsträger des Transportfahrzeugs überhaupt ins Sichtfeld (Field Of View) der Sensoreinrichtung des Greiffahrzeugs passt. Diese Anforderung stellt jedoch mit aktuellen Navigations- und Lokalisierungssystemen kein Problem dar.

Vorteilhafterweise wird die Positionierung des auf dem Transportfahrzeug angeordneten Ladungsträgers in mindestens drei Freiheitsgraden, vorzugsweise vier, insbesondere sechs, Freiheitsgraden ermittelt. Dabei stellen die drei Freiheitsgrade translatorische Bewegungen in den drei Raumachsen x, y, und z, also entlang einer Längsachse, einer Querachse und einer Hochachse dar. Der vierte Freiheitsgrad betrifft eine Drehung um die z-Achse, also die Hochachse. Beim fünften und sechsten Freiheitsgrad handelt es sich um Drehungen um die x- und y-Achse. Zweckmäßigerweise wird das Ladungsträger-Erkennungssystem auf unterschiedliche Ladungsträger, insbesondere auf europäische, amerikanische und japanische Paletten, parametriert, um internationale Anforderungen abdecken zu können.

Eine bevorzugte Ausgestaltung der Erfindung sieht vor, dass die Handhabungseinrichtung des Greiffahrzeugs in Abhängigkeit von dem Ladungsträger-Erkennungssystem gesteuert wird, wobei Toleranzen der Positionierung des auf dem Transportfahrzeug angeordneten Ladungsträgers durch angepasste Steuerungsbefehle kompensiert werden. Die auf dem Greiffahrzeug befindliche Handhabungseinrichtung verfügt in der Regel über ausreichende Bewegungsmöglichkeiten, um die aufgetretenen Toleranzen durch angepasste Steuerbefehle in allen Freiheitsgraden kompensieren zu können. Hierbei kann beispielsweise eine zentrale Steuerungseinheit des Greiffahrzeugs die Handhabungseinrichtung steuern. Das Ladungsträger-Erkennungssystem ist dann bevorzugt mit der zentrale Steuerungseinheit des Greiffahrzeugs verbunden, um Toleranzen der Positionierung des auf dem Transportfahrzeug angeordneten Ladungsträgers durch angepasste Steuerungsbefehle der Handhabungseinrichtung zu kompensieren. Die mit dem Ladungsträger-Erkennungssystem ermittelte Relativpositionierung des Ladungsträgers auf dem Transportfahrzeug geht hierbei bevorzugt als Korrektur in die Steuerungsbefehle der zentralen Steuerungseinheit für die Handhabungseinrichtung ein.

Mit dem Ladungsträger-Erkennungssystem kann die Positionierung des Ladungsträgers auf dem Transportfahrzeug bei Entfernungen bis zu zwei Metern im Bereich weniger Millimeter exakt vermessen werden. Eine Bestimmung im Bereich von Sub-Millimetern ist aufgrund der Beschaffenheit vieler Ladungsträger, bei denen es sich in der Regel um Umlaufteile handelt, nicht erreichbar, aber auch nicht notwendig.

Gemäß einer vorteilhaften Weiterbildung der Erfindung ist vorgesehen, dass eine zentrale Steuerungseinheit des Greiffahrzeugs von einem übergeordneten Leitsystem Informationen zu Packmustern der auf dem Ladungsträger angeordneten Stückgüter übermittelt werden. Das eventuell bereits auf dem Ladungsträger befindliche Packmuster ist dem übergeordneten, in der Regel stationär außerhalb des Greiffahrzeugs vorgesehenen, Leitsystem für jedes Transportfahrzeug zu jeder Zeit bekannt und kann jedem eingesetzten Greiffahrzeug jederzeit zur Verfügung gestellt werden. Die Position des nächsten Stückgutes auf dem aktuellen Packmuster wird ebenso durch dieses Leitsystem an das Greiffahrzeug übermittelt. Somit wird eine exakte Positionierung jedes Stückgutes an jeder möglichen Stelle auf dem Ladungsträger, beispielsweise einer Ziel-Palette, ermöglicht, egal ob es sich um die unterste, mittlere oder oberste Lage, eine vordere oder hintere Position oder eine linke oder rechte Position handelt. Ein bereits bestehendes Packmuster wird im Ladungsträger-Erkennungssystem im Hintergrund berücksichtigt.

Die Erfindung betrifft ferner ein System zur Durchführung eines Verfahrens zum Kommissionieren von Stückgütern, die auf mindestens einem als Quell-Ladungsträger dienenden Ladungsträger bevorratet und vereinzelt auf mindestens einem als Ziel-Ladungsträger dienenden Ladungsträger ablegbar sind, wobei mindestens ein Greiffahrzeug, auf dem eine Handhabungseinrichtung angeordnet ist, und mindestens ein Transportfahrzeug, auf dem mindestens einer der Ladungsträger angeordnet ist, vorgesehen sind.

Bei dem System wird die gestellte Aufgabe dadurch gelöst, dass auf dem Greiffahrzeug ein Ladungsträger-Erkennungssystem vorgesehen ist, das dazu ausgebildet ist, den auf dem Transportfahrzeug angeordneten Ladungsträger zu erkennen und die relative Positionierung des auf dem Transportfahrzeug angeordneten Ladungsträgers zum Greiffahrzeug zu ermitteln.

Dabei umfasst das Ladungsträger-Erkennungssystem zweckmäßigerweise eine Sensoreinrichtung und eine elektronische Steuerungseinrichtung.

Die Sensoreinrichtung umfasst bevorzugt mindestens einen optischen Sensor, insbesondere eine Kamera oder einen Laserscanner. Die Kamera kann beispielsweise als 2D- oder 3D-Kamera oder als Time-of-Flight-Kamera ausgebildet sein.

Verschiedene Ladungsträger sind möglich beziehungsweise dem Ladungsträger-Erkennungssystem anlernbar. So können als Ladungsträger neben einer Euro-Palette auch eine andere Palette, eine Gitterbox oder ein Rollwagen verwendet werden.

Die Erfindung kann auch bei eCommerce-Anwendungen zum Einsatz kommen, bei denen Stückgüter in eine Kiste oder Box als Ladungsträger abgelegt werden. In diesem Fall wird die Kiste als Ladungsträger lokalisiert. Es kann eventuell auch eine zusätzliche Identifikation erfolgen, wenn auf dem Transportfahrzeug mehrere Boxen und damit mehrere Kundenaufträge vorhanden sind.

Besonders bevorzugt ist in der Steuerungseinrichtung ein Algorithmus hinterlegt, der auf eine Erkennung des Ladungsträgers aus den Sensordaten ausgelegt ist.

Eine weitere vorteilhafte Ausgestaltung sieht vor, dass in der Steuerungseinrichtung ein Berechnungsprogramm hinterlegt ist, das auf eine Ermittlung der relativen Positionierung des auf dem Transportfahrzeug angeordneten Ladungsträgers zum Greiffahrzeug aus den Sensordaten ausgelegt ist.

Dabei steht die Steuerungseinrichtung bevorzugt mit der Handhabungseinrichtung in Wirkverbindung, beispielsweise über eine zentrale, die Handhabungseinrichtung steuernde Steuerungseinheit des Greiffahrzeugs, wobei die Handhabungseinrichtung durch Steuerungsbefehle steuerbar ist, welche an die ermittelte relative Positionierung des Ladungsträgers anpassbar sind.

Die Erfindung bietet eine ganze Reihe von Vorteilen:
Es können exakte Positionsdaten des auf dem Transportfahrzeug angeordneten Ladungsträgers, beispielsweise eines Ziel-Ladungsträgers, erfasst werden. Dabei handelt es sich um eine relative Positionsmessung, die direkter ist als eine Ermittlung über Verrechnung mehrerer absoluter Werte.

Außerdem wird die Toleranzkette verkürzt, weil nicht das Transportfahrzeug, sondern direkt der auf dem Transportfahrzeug befindliche Ladungsträger lokalisiert wird.

Es kann eine einfache standardisierte Geometrie, zum Beispiel einer Palette, als Erkennungsmerkmal genutzt werden.

Ferner kann ein Basis-Punkt für ein darauf zu errichtendes Packmuster errechnet werden.

Mit der Erfindung wird die Grundlage für ein stabiles Packmuster auf einem Ziel-Ladungsträger geschaffen, so dass hohe Packdichten und hohe Packhöhen des Ziel-Ladungsträgers ermöglicht werden.

Außerdem wird das Ablegen von Stückgütern, beispielsweise Paketen, unabhängig von einer Vorbeladung durch ein bestehendes Packmuster ermöglicht. Zum Beispiel kann ein erstes Paket auf einer leeren Palette abgelegt werden, aber auch ein erstes Paket einer neuen Lage oder jede andere Konstellation realisiert werden.

Von Vorteil ist auch eine Robustheit der Positionserkennung gegen Verschiebungen des Ladungsträgers auf dem Transportfahrzeug im Betrieb während der Fahrt.

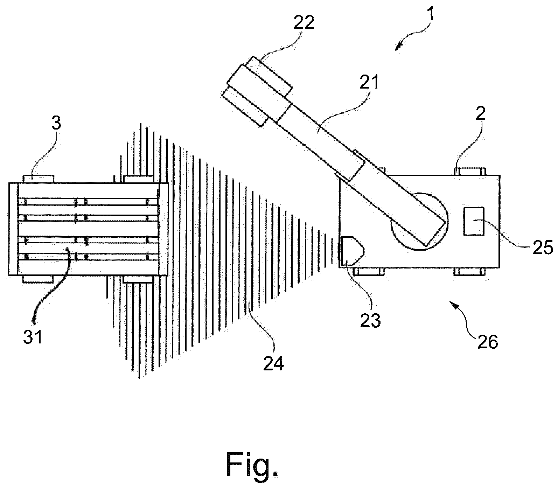

Weitere Vorteile und Einzelheiten der Erfindung werden anhand des in der schematischen Figur dargestellten Ausführungsbeispiels näher erläutert. Hierbei zeigt die Figur eine Draufsicht auf ein erfindungsgemäßes System zur Kommissionierung.

In der Figur ist ein autonomes, kollaboratives System 1 zur Kommissionierung von Stückgütern 22 dargestellt. Als Stückgüter 22 kommen beispielsweise Pakete in Betracht, die auf einem als Ziel-Ladungsträger dienenden Ladungsträger 31 abgelegt werden sollen. Der Ladungsträger 31 ist im vorliegenden Fall als Ziel-Palette ausgebildet, der von einem Transportfahrzeug 3 mitgeführt wird.

Ein Greiffahrzeug 2 des kollaboratives Systems 1 verfügt über eine Handhabungseinrichtung 21, die beispielsweise einen Roboterarm und einen Greifer umfasst. Mit der Handhabungseinrichtung 21 werden die Stückgüter 22 von einem, in der Figur nicht dargestellten Quell-Ladungsträger, zum Beispiel von einem Regalfach, aufgenommen. Die aufgenommenen Stückgüter 22 werden mittels des Greiffahrzeugs 2 zu einem Transportfahrzeug 3 des kollaboratives Systems 1 befördert, das den Ziel-Ladungsträger 31 trägt, auf den die aufgenommene Stückgüter 22 von dem Greiffahrzeug 2 abgelegt werden.

Um die Stückgüter 22 von dem Greiffahrzeug 2 zielgenau auf dem Ladungsträger 31 des Transportfahrzeugs 3 ablegen zu können, wird die relative Positionierung des auf dem Transportfahrzeug 3 befindlichen Ladungsträgers 31 zum Greiffahrzeug 2 ermittelt. Hierfür sind auf dem Greiffahrzeug 2 eine Sensoreinrichtung 23 und eine elektronische Steuerungseinrichtung 25 vorgesehen, die das Ladungsträger-Erkennungssystem 26 bilden.

Der Ladungsträger 31 des Transportfahrzeugs 3 befindet sich im Sichtfeld 24 der Sensoreinrichtung 23. Die Sensoreinrichtung 23, die zum Beispiel als Kamera ausgebildet sein kann, erfasst den Ladungsträger 31 und übermittelt die Sensordaten an die Steuerungseinrichtung 25. Die Steuerungseinrichtung 25 liest die Sensordaten aus. Anhand eines in der Steuerungseinrichtung 25 hinterlegten Algorithmus kann das Vorhandensein des Ladungsträgers 31 erkannt werden. Außerdem kann durch ein in der Steuerungseinrichtung 25 hinterlegtes Berechnungsprogramm die relative Positionierung des Ladungsträgers 31 zum Greiffahrzeug 2 aus den Sensordaten berechnet werden.

Aufgrund der Detektion und Lokalisation des Ladungsträgers 31 auf dem Transportfahrzeug 3 mittels des Ladungsträger-Erkennungssystems 26 sind die Positionstoleranzen der beiden Fahrzeuge 2, 3 sowie Positions- und Orientierungsfehler des Ziel-Ladungsträgers 31 auf dem Transportfahrzeug 3 irrelevant, weil eine relative Positionierung der Handhabungseinrichtung 21 des Greiffahrzeugs 2 zum Ladungsträger 31 des Transportfahrzeugs 3 möglich ist. Dazu muss im Steuerungssystem 25 oder einer zentrale Steuerungseinheit des Greiffahrzeugs 2, die die Handhabungseinrichtung 21 steuert, nur noch die exakte Positionierung der Sensoreinrichtung 23 und des Manipulators oder Greifers der Handhabungseinrichtung 21 bekannt sein, damit die Koordinatensysteme mittels einfacher Transformationen in einander umgerechnet werden können. Die Positionsfehler beider Fahrzeuge 2 und 3 im absoluten Lagerhaus-Koordinatensystem, sowie Positions- und Orientierungsfehler des Ladungsträgers 31 auf dem Transportfahrzeug 3 spielen für eine exakte Ablage des von dem Greiffahrzeug 2 aufgenommenen Stückgutes 22 auf dem Ziel-Ladungsträger 31 des Transportfahrzeugs 3 durch das Greiffahrzeug 2 keine Rolle mehr.

## Patentansprüche

1. Verfahren zum Kommissionieren von Stückgütern (22), die auf mindestens einem als Quell-Ladungsträger dienenden Ladungsträger (31) bevorratet und vereinzelt auf mindestens einem als Ziel-Ladungsträger dienenden Ladungsträger (31) abgelegt werden, wobei mindestens ein Greiffahrzeug (2), auf dem eine Handhabungseinrichtung (21) angeordnet ist, und mindestens ein Transportfahrzeug (3), auf dem mindestens einer der Ladungsträger (31) angeordnet ist, vorgesehen sind, und wobei die Stückgüter (22) mittels der Handhabungseinrichtung (21) des Greiffahrzeugs (2) von dem als Quell-Ladungsträger dienenden Ladungsträger (31) aufgenommen und auf dem als Ziel-Ladungsträger dienenden Ladungsträger (31) abgelegt werden, **dadurch gekennzeichnet, dass** mittels eines auf dem Greiffahrzeug (2) vorgesehenen Ladungsträger-Erkennungssystems (26) der auf dem Transportfahrzeug (3) angeordnete Ladungsträger (31) erkannt wird und die relative Positionierung des auf dem Transportfahrzeug (3) angeordneten Ladungsträgers (31) zum Greiffahrzeug (2) ermittelt wird.

2. Verfahren nach Anspruch 1, **dadurch gekennzeichnet, dass** als Ladungsträger-Erkennungssystem (26) ein, eine Sensoreinrichtung (23) und eine elektronische Steuerungseinrichtung (25) umfassendes, Ladungsträger-Erkennungssystem (26) verwendet wird, wobei die Sensoreinrichtung (23) Objekte in der Umgebung des Greiffahrzeugs (2) erfasst und Sensordaten der erfassten Objekte an die Steuerungseinrichtung (25) übermittelt, welche die Sensordaten mittels eines, auf eine Ladungsträger-Erkennung ausgelegten Algorithmus, auswertet und bei Erkennung des auf dem Transportfahrzeug (3) angeordneten Ladungsträgers (31) die relative Positionierung des auf dem Transportfahrzeug (3) angeordneten Ladungsträgers (31) zum Greiffahrzeug (2) ermittelt.

3. Verfahren nach Anspruch 1 oder 2, **dadurch gekennzeichnet, dass** die Positionierung des auf dem Transportfahrzeug (3) angeordneten Ladungsträgers (31) in mindestens drei Freiheitsgraden, vorzugsweise vier, insbesondere sechs, Freiheitsgraden ermittelt wird.

4. Verfahren nach einem der Ansprüche 1 bis 3, **dadurch gekennzeichnet, dass** das Ladungsträger-Erkennungssystem (26) auf unterschiedliche Ladungsträger (31), insbesondere auf europäische, amerikanische und japanische Paletten, parametriert wird.

5. Verfahren nach einem der Ansprüche 1 bis 4, **dadurch gekennzeichnet, dass** die Handhabungseinrichtung (21) des Greiffahrzeugs (2) in Abhängigkeit von dem Ladungsträger-Erkennungssystem (26) gesteuert wird, wobei Toleranzen der Positionierung des auf dem Transportfahrzeug (3) angeordneten Ladungsträgers (31) durch angepasste Steuerungsbefehle kompensiert werden.

6. Verfahren nach einem der Ansprüche 1 bis 5, **dadurch gekennzeichnet, dass** an eine zentrale Steuerungseinheit des Greiffahrzeugs (2) von einem übergeordneten Leitsystem Informationen zu Packmustern der auf dem Ladungsträger (31) angeordneten Stückgüter (22) übermittelt werden.

7. System (1) zur Durchführung eines Verfahrens nach einem der Ansprüche 1 bis 6 zum Kommissionieren von Stückgütern (22), die auf mindestens einem als Quell-Ladungsträger dienenden Ladungsträger (31) bevorratet und vereinzelt auf mindestens einem als Ziel-Ladungsträger dienenden Ladungsträger (31) ablegbar sind, wobei mindestens ein Greiffahrzeug (2), auf dem eine Handhabungseinrichtung (21) angeordnet ist, und mindestens ein Transportfahrzeug (3), auf dem mindestens einer der Ladungsträger (31) angeordnet ist, vorgesehen sind, **dadurch gekennzeichnet, dass** auf dem Greiffahrzeug (2) ein Ladungsträger-Erkennungssystem (26) vorgesehen ist, das dazu ausgebildet ist, den auf dem Transportfahrzeug (3) angeordneten Ladungsträger (31) zu erkennen und die relative Positionierung des auf dem Transportfahrzeug (3) angeordneten Ladungsträgers (31) zum Greiffahrzeug (2) zu ermitteln.

8. System (1) nach Anspruch 7, **dadurch gekennzeichnet, dass** das Ladungsträger-Erkennungssystem (26) eine Sensoreinrichtung (23) und eine elektronische Steuerungseinrichtung (25) umfasst.

9. System (1) nach Anspruch 8, **dadurch gekennzeichnet, dass** die Sensoreinrichtung (23) mindestens einen optischen Sensor, insbesondere eine Kamera oder einen Laserscanner, umfasst.

10. System (1) nach Anspruch 8 oder 9, **dadurch gekennzeichnet, dass** in der Steuerungseinrichtung (25) ein Algorithmus hinterlegt ist, der auf eine Erkennung des Ladungsträgers (31) aus den Sensordaten ausgelegt ist.

11. System (1) nach einem der Ansprüche 8 bis 10, **dadurch gekennzeichnet, dass** in der Steuerungseinrichtung (25) ein Berechnungsprogramm hinterlegt ist, das auf eine Ermittlung der relativen Positionierung des auf dem Transportfahrzeug (3) angeordneten Ladungsträgers (31) zum Greiffahrzeug (2) aus den Sensordaten ausgelegt ist.

12. System (1) nach Anspruch 11, **dadurch gekennzeichnet, dass** die Steuerungseinrichtung (25) mit der Handhabungseinrichtung (21) in Wirkverbindung steht, wobei die Handhabungseinrichtung (21) durch Steuerungsbefehle steuerbar ist, welche an die ermittelte relative Positionierung des Ladungsträgers (31) anpassbar sind.
